# FASCICULE DE BREVET EUROPEEN

(11) **EP 2 073 740 B1**
(45) Date de publication et mention de la délivrance du brevet: **16.03.2016**
(21) Numéro de dépôt: 07826520.4
(22) Date de dépôt: 24.09.2007
(51) Int. Cl.: A61C 1/00, A61C 1/05

(54) **PIECE A MAIN DENTAIRE A DISPOSITIF DE FILTRAGE**
HAND-DENTALINSTRUMENT MIT FILTRATIONSVORRICHTUNG
HAND HELD DENTAL INSTRUMENT WITH FILTRATION DEVICE

(30) Priorité: 25.09.2006 FR 0653934
(43) Date de publication de la demande: 01.07.2009
(73) Titulaire: ANTHOGYR, 74700 Sallanches (FR)
(72) Inventeur: BONIN, Yves, 74300 Araches La Frasse (FR); LAMOUR, Fabrice, 74190 Passy (FR)
(74) Mandataire: Cabinet Poncet
(86) Numéro de dépôt international: PCT/IB2007/053873
(87) Numéro de publication internationale: WO 2008/038217

(56) Documents cités:
- EP-A- 0 591 953
- EP-A- 0 976 366
- EP-A- 1 279 377
- EP-A2- 1 234 548
- US-A- 6 106 287

## Description

### DOMAINE TECHNIQUE DE L'INVENTION

La présente invention concerne les pièces à main utilisées, entre autres, par les dentistes et chirurgiens dentistes. Plus particulièrement, l'invention concerne les pièces à main dentaires permettant de porter un outil de travail et de l'entraîner en mouvement relatif pour opérer ou soigner un patient.

Au cours de l'opération, il est parfois nécessaire d'utiliser des fluides tels que de l'air ou de l'eau pulvérisés sous pression pour refroidir l'outil de travail et/ou pour nettoyer et refroidir la zone de travail et son voisinage. Les pièces à main dentaires sont ainsi reliées à une centrale d'alimentation via un tuyau d'alimentation leur fournissant le ou les fluides sous pression.

Les pièces à main dentaires comportent ainsi des canalisations internes et/ou externes pour l'amenée du ou des fluides. Ces canalisations présentent une section très réduite et il y a donc un risque que celles-ci se bouchent.

Il est ainsi nécessaire de filtrer le ou les fluides afin que ceux-ci ne contiennent pas de particules polluantes susceptibles de boucher les canalisations de la pièce à main dentaire.

Une première solution a consisté jusqu'à présent à effectuer un filtrage du ou des fluides après la sortie de la centrale d'alimentation. Tel est le cas notamment des documents US 5,556,279 et US 5,630,939 qui proposent des dispositifs de filtrage destinés à être montés sur la conduite d'alimentation en fluide, intercalés entre la pièce à main et la centrale d'alimentation.

Cependant, entre ces dispositifs de filtrage et la pièce à main dentaire, de nombreux éléments constituent encore le chemin d'amenée des fluides (conduites, zones de connexion étanche, ...) et sont susceptibles de produire, lors de l'utilisation de la pièce à main dentaire, des particules risquant d'obstruer les canalisations de la pièce à main dentaire et qui ne sont pas filtrées. Tel est le cas notamment de nombreux joints toriques d'étanchéité disposés en particulier au voisinage de la zone de connexion de la pièce à main dentaire avec la conduite d'alimentation en provenance de la centrale d'alimentation. En effet, les connexions et déconnexions successives induisent des contraintes de cisaillement et de compression dans les joints toriques d'étanchéité et provoquent, par abrasion, le détachement de particules polluantes à base d'élastomères.

En l'absence d'un dispositif de filtrage en aval de la connexion entre le tuyau d'alimentation et la pièce à main dentaire, ces particules sont emportées par le ou les fluides, pénètrent dans les canalisations de la pièce à main dentaire et, si elles ne les bouchent pas, sont projetées au voisinage de la zone de travail dans la bouche du patient, induisant un manque d'hygiène critique.

On a ainsi eu recours à des dispositifs de filtrage se montant directement à l'extrémité proximale des pièces à main dentaires, comme c'est le cas des documents EP 1 279 377 et US 6,106,287 par exemple. Il reste néanmoins toujours une zone de connexion étanche en aval de ces dispositifs de filtrage et qui est susceptible de produire là encore l'apparition de particules polluantes par les déconnexions/connexions successives de la pièce à main dentaire. En outre, l'encombrement de ces dispositifs de filtrage vient s'ajouter à l'encombrement de la pièce à main dentaire. Une telle solution gêne le praticien lors des opérations, celui-ci n'ayant que très peu d'espace disponible lors de son travail. De tels dispositifs ne permettent ainsi pas de répondre de façon satisfaisante aux besoins et aux attentes des praticiens.

Il a alors été proposé des dispositifs de filtrage intégrés directement dans le manche de la pièce à main dentaire, comme dans le document EP 1 234 548 qui utilise une cartouche cylindrique à filtrage radial. Une telle solution nécessite un prolongement longitudinal du manche de la pièce à main dentaire pour y loger la cartouche de filtrage, augmentant là encore l'encombrement de la pièce à main dentaire.

En outre, tous les dispositifs de filtrage des documents US 5,556,279, US 5,630,939, US 6,106,287, EP 1 234 548 et EP 1 279 377 fonctionnent selon le principe de filtration par tamisage. Une filtration par tamisage s'effectue à l'aide d'un filtre à mailles à section de passage déterminée. Les particules de taille supérieure à la section de passage des mailles sont retenues par le filtre tandis que les autres passent au travers. L'efficacité du filtre est ainsi très limitée.

En outre, la filtration par tamisage induit, du fait de l'accumulation des particules retenues sur le filtre, des pertes de charge qui peuvent être néfastes. Il donc est nécessaire de procéder au remplacement périodique des filtres et cartouches de filtrage cylindriques, ce qui entraîne une perte de temps régulière, un démontage et un remontage du dispositif souvent longs et laborieux, ainsi que l'achat de fournitures consommables de prix non négligeable. Du fait des longs temps de démontage et remontage exigés par l'opération de changement des filtres et cartouches de filtrage cylindriques, le praticien est tenté de repousser à plus tard le changement de ceux-ci. Ceci a pour résultat un manque d'hygiène et une perte de charges notoires dans les conduites de fluides, le filtre ou la cartouche de filtrage cylindrique étant obstrués plus que de raison.

Le document EP 0 591 953 décrit une pièce à main dentaire comprenant des cartouches longitudinales de filtrage par tamisage disposées dans des chambres de filtrage cylindriques allongées selon la direction longitudinale selon laquelle s'étend la pièce à main dentaire. L'allongement des chambres de filtrage augmente l'encombrement du manche de la pièce à main dentaire selon la direction longitudinale. De plus, les cartouches de filtrage fonctionnent selon le principe de filtration par tamisage

Pour remédier à ces inconvénients, le document US 6,196,841 propose une pluralité d'ouvertures réalisées dans un tronçon sensiblement cylindrique du manche de la pièce à main dentaire. On retrouve là encore une filtration par tamisage avec la taille des ouvertures qui détermine les propriétés de filtrage, et dont les performances sont limitées.

En outre, la réalisation de cette pluralité d'ouvertures s'avère fastidieuse et onéreuse en raison du grand nombre d'ouvertures de taille précise qu'il est nécessaire de réaliser.

### EXPOSE DE L'INVENTION

Un premier problème proposé par l'invention est de réaliser de façon simple et peu onéreuse un moyen de filtrage fiable du ou des fluides en aval de la zone de connexion entre la pièce à main dentaire et le tuyau d'alimentation en fluides, lequel moyen de filtrage devant être facilement démontable et nettoyable par un technicien qualifié ou par l'utilisateur lui-même.

Simultanément, la présente invention vise à réaliser un moyen de filtrage du ou des fluides dans une pièce à main dentaire qui ne nécessite aucun consommable tel qu'une cartouche de filtrage, qui évite les accumulations des impuretés au voisinage de la zone de filtrage afin de ne pas provoquer de pertes de charges, et qui présente un très faible volume afin de ne pas augmenter l'encombrement de la pièce à main dentaire et de ne pas gêner le praticien dans son travail.

Pour atteindre ces objets ainsi que d'autres, l'invention propose une pièce à main dentaire permettant de porter un outil de travail et de l'entraîner en mouvement relatif, comprenant :
- un corps avec une extrémité proximale de corps à alésage interne de connexion et une extrémité distale de corps, apte à être connecté selon son extrémité proximale à des moyens moteurs et à des moyens d'amenée de fluides pour conduire au moins un fluide,
- une tête connectée à l'extrémité distale de corps, apte à porter l'outil de travail, et comportant des moyens de projection de fluides en direction de la zone de travail de l'outil,
- au moins des premiers moyens de conduction de fluides, permettant de conduire les fluides au travers du corps depuis l'extrémité proximale du corps et de les transmettre aux moyens de projection de fluides de la tête, comprenant un canal amont de conduction de fluides, un canal aval de conduction de fluides, et une chambre de collecte de fluides dans le corps, disposée entre le canal amont de conduction de fluides et le canal aval de conduction de fluides,
dans laquelle :
- la chambre de collecte de fluides est radiale,
- un pion de filtrage est rapporté dans la chambre radiale de collecte de fluides, avec un jeu qui permet le passage et assure le filtrage des fluides entre le canal amont de conduction de fluides et le canal aval de conduction de fluides.

Une telle pièce à main dentaire comporte un dispositif de filtrage qui lui est intégré directement, réalisant une filtration le plus en aval possible sur le chemin parcouru par le fluide.

La filtration s'effectue en majeure partie selon un principe de filtration par inertie, plus efficace que la filtration par simple tamisage et ne nécessitant pas l'utilisation de consommables tels que des filtres ou des cartouches de filtrage. Il n'est ajouté aucun encombrement supplémentaire susceptible de gêner le praticien. En outre, il est seulement nécessaire de réaliser une unique chambre radiale de collecte de fluides et un pion de filtrage rapporté, ce qui s'avère peu onéreux.

De préférence, on peut prévoir que :
- le canal amont de conduction de fluides s'étend radialement depuis l'alésage interne de connexion du corps vers la chambre radiale de collecte de fluides,
- le canal aval de conduction de fluides s'étend depuis la chambre radiale de collecte de fluides vers l'extrémité distale du corps.

Il est ainsi prévu un autre filtrage par effet d'inertie en amont de la chambre radiale de collecte de fluides, dans l'alésage interne de connexion.

Les fluides envoyés dans la pièce à main dentaire circulent initialement selon l'axe longitudinal de l'alésage interne de connexion du corps. Afin de pénétrer dans les canaux de conduction de fluides, les fluides auront à effectuer une trajectoire comportant une bifurcation à 90°. De par leur taille et leur poids, les particules polluantes, telles que des morceaux de joint d'étanchéité, ne pourront pas effectuer ce brusque changement de trajectoire, poursuivront une course sensiblement parallèle à l'axe longitudinal de l'alésage interne de connexion et ne viendront pas s'accumuler au voisinage de la zone de filtrage. On filtre ainsi latéralement le fluide s'écoulant selon la direction longitudinale de l'alésage interne de connexion du corps. Le flux et les turbulences au voisinage de la zone latérale de filtrage permettent de chasser toute particule polluante qui se serait accumulée au voisinage de la zone de filtrage. On évite ainsi les pertes de charges au fur et à mesure de l'utilisation de la pièce à main dentaire.

Avantageusement, le pion de filtrage peut présenter une forme extérieure sensiblement complémentaire de la forme intérieure de la chambre radiale de collecte de fluides, ce qui permet de plus facilement connaître et maîtriser la section de passage de fluide dans la chambre radiale de collecte de fluides en vue de maîtriser le débit de fluide.

De préférence, on peut prévoir que :
- la chambre radiale de collecte de fluides comprend un alésage borgne radial à section circulaire, réalisé dans le corps et débouchant sur la surface extérieure du corps, avec une paroi de fond se terminant au voisinage proche de l'alésage interne de connexion du corps,
- le canal amont de conduction de fluides s'étend radialement depuis l'alésage interne de connexion du corps vers la paroi de fond de la chambre radiale de collecte de fluides.

La chambre radiale de collecte de fluides est ainsi facile à réaliser au moyen d'un outil s'approchant radialement du corps de la pièce à main dentaire. On dispose ainsi d'une grande accessibilité pour l'outil, ce qui facilite grandement la réalisation de la chambre radiale de collecte de fluides et en diminue le coût de fabrication.

Par le fait que la paroi de fond de la chambre radiale de collecte de fluides se termine au voisinage proche de l'alésage interne de connexion du corps, le canal amont de conduction de fluides s'étend selon une très faible longueur depuis l'alésage interne de connexion du tronçon proximal vers la paroi de fond de la chambre radiale de collecte de fluides. Lors du filtrage, les impuretés n'auront ainsi pas tendance à s'accumuler dans le canal amont de conduction de fluides mais à rester dans l'alésage interne de connexion du corps.

Le nettoyage de la pièce à main dentaire s'avère ainsi grandement simplifié : après avoir déconnecté le tuyau d'alimentation de la pièce à main dentaire, le praticien n'a plus qu'à diriger un jet de fluides de nettoyage dans l'alésage interne de connexion du corps afin de retirer toutes les particules polluantes qui s'y seraient accumulées. Le nettoyage de la pièce à main dentaire ne nécessite aucun démontage long et fastidieux et pourra être effectué très régulièrement sans pour autant induire une perte de temps notoire pour le praticien.

De préférence, on peut prévoir que :
- le pion de filtrage comporte une face d'extrémité distale et un tronçon distal de filtrage cylindrique à section circulaire, le diamètre extérieur du tronçon distal de filtrage cylindrique étant inférieur au diamètre intérieur de la chambre radiale de collecte de fluides,
- le pion de filtrage comporte un tronçon proximal de fixation cylindrique à section circulaire et à face d'extrémité proximale, de diamètre extérieur sensiblement égal au diamètre intérieur de la chambre radiale de collecte de fluides, destiné à assurer la fixation du pion de filtrage dans la chambre radiale de collecte de fluides et à obturer la chambre radiale de collecte de fluides.

Un tel pion de filtrage est simple et peu onéreux à fabriquer.

Avantageusement, on peut prévoir que, au voisinage de sa face d'extrémité distale, le pion de filtrage comporte :
- une collerette périphérique de diamètre extérieur sensiblement égal au diamètre intérieur de la chambre radiale de collecte de fluides,
- au moins une cannelure axiale prévue en périphérie de la collerette.

La collerette périphérique de diamètre extérieur sensiblement égal au diamètre de la chambre radiale de collecte de fluides permet un centrage plus facile du pion de filtrage dans la chambre, ce qui facilite le montage du pion de filtrage. En outre, les cannelures axiales peuvent participer au filtrage en fonction de la taille de leur section pour une filtration par tamisage.

De préférence, le pion de filtrage peut être fixé dans la chambre radiale de collecte de fluides avec un jeu axial entre sa face d'extrémité distale et la paroi de fond de l'alésage borgne radial de la chambre radiale de collecte de fluides, le jeu axial permettant le passage et assurant le filtrage des fluides entre le canal amont de conduction de fluides et le canal aval de conduction de fluides.

Le filtrage s'effectue ainsi d'une part par le jeu axial compris entre le pion de filtrage et la paroi de fond de l'alésage borgne de la chambre radiale de collecte de fluides, et d'autre part par la différence de diamètre entre le tronçon distal de filtrage cylindrique du pion de filtrage et l'alésage borgne cylindrique de la chambre radiale de collecte de fluides. On améliore ainsi sensiblement la fiabilité du filtrage.

De préférence, on peut prévoir que :
- la face d'extrémité distale comporte au moins une rainure débouchant sur la paroi extérieure du tronçon distal de filtrage cylindrique,
- le pion de filtrage est fixé dans la chambre radiale de collecte de fluides avec la face d'extrémité distale en butée contre la paroi de fond de l'alésage borgne radial de la chambre radiale de collecte de fluides.

Le pion de filtrage peut ainsi être inséré dans la chambre radiale de collecte de fluides jusqu'à venir en butée, selon sa face d'extrémité distale, contre la paroi de fond de l'alésage borgne de la chambre radiale de collecte de fluides. En fonction de la taille de la section des rainures, les rainures peuvent participer au filtrage selon une filtration par tamisage.

Avantageusement, le pion de filtrage peut être chassé dans l'alésage borgne radial de la chambre radiale de collecte de fluides, avec le tronçon proximal de fixation cylindrique du pion de filtrage monté serré dans l'alésage borgne radial de la chambre radiale de collecte de fluides.

Le montage du pion de filtrage s'avère ainsi simple et rapide. Si on le souhaite, celui-ci peut être en outre monté serré de façon à être indémontable par un utilisateur afin que celui-ci ne le perde pas. Le pion de filtrage pourra toutefois être démonté par un technicien qualifié outillé en conséquence.

De préférence, on peut prévoir que :
- l'alésage borgne radial de la chambre radiale de collecte de fluides comporte un filetage interne sur une partie au moins de sa longueur,
- le tronçon proximal de fixation cylindrique du pion de filtrage comporte un filetage externe,
- la face d'extrémité proximale du tronçon proximal de fixation cylindrique du pion de filtrage comporte une empreinte de vissage.

Le pion de filtrage est ainsi simple et rapide à monter. Un tel pion de filtrage s'avère en outre aisément démontable par toute personne disposant d'un tournevis correspondant à l'empreinte de vissage. Un indexage du filet du filetage externe du tronçon proximal de fixation peut être réalisé pour que le pion de filtrage soit monté dans la chambre radiale de collecte de fluides en laissant toujours le même jeu axial entre la face d'extrémité distale du pion de filtrage et la paroi de fond de l'alésage borgne radial de la chambre radiale de collecte de fluides.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue en coupe partielle d'un premier mode de réalisation d'une pièce à main dentaire selon l'invention ;
- la figure 2 est une vue de détail de la figure 1 ;
- la figure 3 est une vue du mode de réalisation du pion de filtrage utilisé sur les figures 1 et 2 ;
- la figure 4 est une vue de détail en coupe d'un second mode de réalisation d'une pièce à main dentaire selon l'invention ;
- la figure 5 est une vue en perspective du mode de réalisation du pion de filtrage utilisé dans la figure 4 ;
- les figures 6 à 11 illustrent d'autres modes de réalisation de pions de filtrage pouvant être utilisés avec l'un ou l'autre des modes de réalisation de pièce à main dentaire illustrés sur les figures 1 et 4.

### DESCRIPTION DES MODES DE REALISATION PREFERES

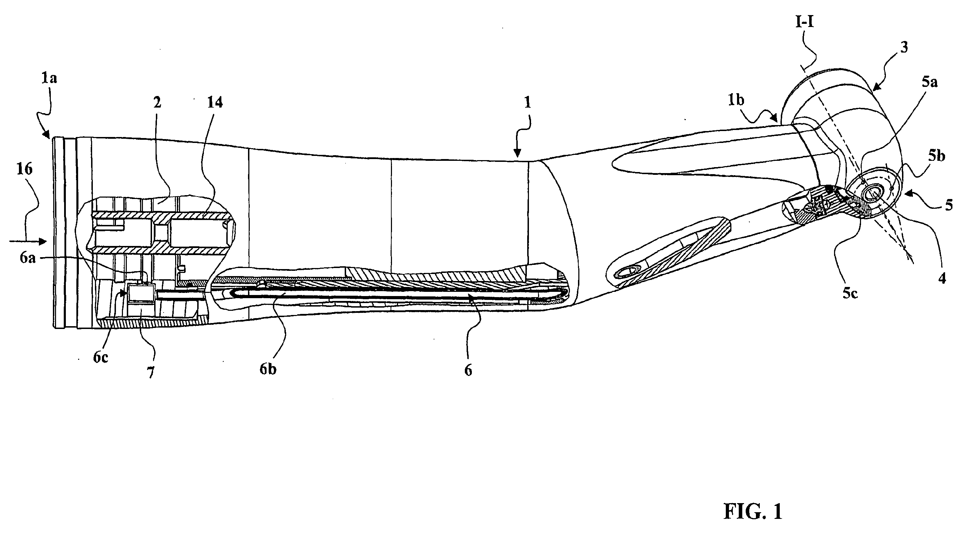

La figure 1 représente un premier mode de réalisation de pièce à main dentaire selon l'invention. La pièce à main dentaire comporte :
- un corps 1, avec une extrémité proximale 1a de corps 1 à alésage interne de connexion 2, avec une extrémité distale 1 b de corps 1, apte à être connecté selon son extrémité proximale 1 a à des moyens moteurs et à des moyens d'amenée de fluides (non représentés),
- une tête 3, connectée à l'extrémité distale 1 b de corps 1, apte à porter l'outil de travail (non représenté) dans un mandrin 4, et comportant des moyens de projection 5 de fluides en direction de la zone de travail de l'outil,
- des premiers moyens de conduction de fluides 6, permettant de conduire les fluides au travers du corps 1 depuis l'extrémité proximale 1 a du corps 1 et de les transmettre aux moyens de projection 5 de fluides de la tête 3.

Dans le mode de réalisation illustré sur la figure 1, les moyens de projection 5 de fluides comportent trois buses de projection 5a, 5b et 5c permettant de générer chacune un jet axial de fluide.

Les premiers moyens de conduction de fluides 6 comprennent un canal amont de conduction de fluides 6a, un canal aval de conduction de fluides 6b et une chambre radiale de collecte de fluides 6c dans le corps 1, disposée entre le canal amont de conduction de fluides 6a et le canal aval de conduction de fluides 6b. Un pion de filtrage 7 est rapporté dans la chambre radiale de collecte de fluides 6c avec un jeu qui permet le passage et assure le filtrage des fluides entre le canal amont de conduction de fluides 6a et le canal aval de conduction de fluides 6b.

Le canal amont de conduction de fluides 6a s'étend radialement depuis l'alésage interne de connexion 2 du corps 1 vers la chambre radiale de collecte de fluides 6c, tandis que le canal aval de conduction de fluides 6b s'étend depuis la chambre radiale de collecte de fluides 6c vers l'extrémité distale 1 b du corps 1.

Il n'y a aucune zone de connexion détachable en aval de la chambre radiale de collecte de fluides 6c où est effectué le filtrage du fluide.

Le pion de filtrage 7 présente une forme extérieure sensiblement complémentaire de la forme intérieure de la chambre radiale de collecte de fluides 6c à un jeu près.

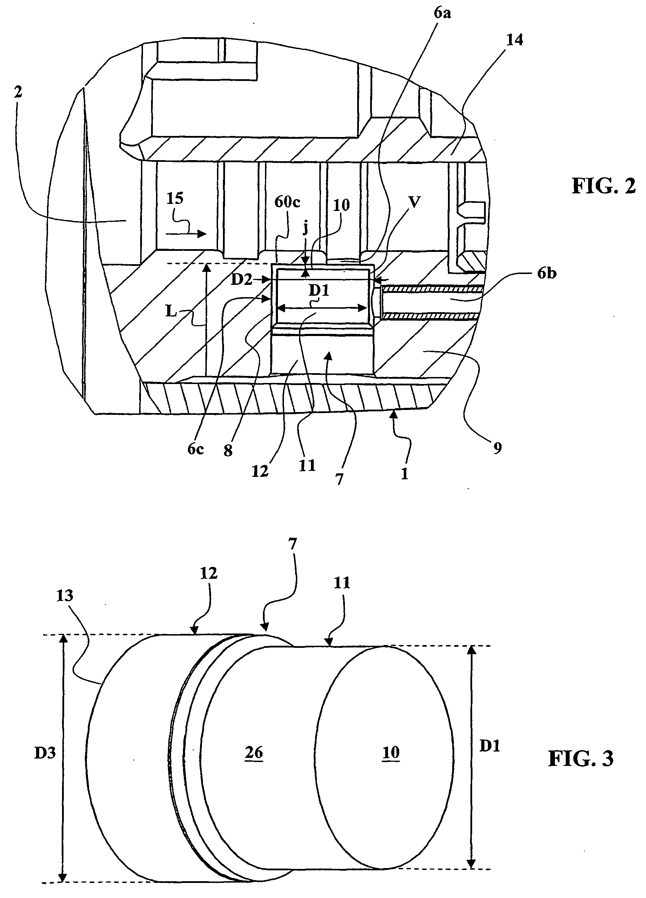

On voit plus particulièrement sur la vue de détail de la figure 2 que la chambre radiale de collecte de fluides 6c comprend un alésage borgne 8 radial à section circulaire, réalisé dans le corps 1 et débouchant sur la surface extérieure d'une pièce de connexion 9 dans laquelle est réalisé l'alésage interne de connexion 2. La chambre radiale de collecte de fluides 6c comprend une paroi de fond 60c se terminant au voisinage proche de l'alésage interne de connexion 2 du corps 1. Le canal amont de conduction de fluides 6a s'étend radialement depuis l'alésage interne de connexion 2 du corps 1 vers la paroi de fond 60c de la chambre radiale de collecte de fluides 6c.

Le pion de filtrage 7 utilisé dans le mode de réalisation illustré sur les figures 1 et 2 est représenté plus en détail sur la figure 3. Ce pion de filtrage 7 comporte une face d'extrémité distale 10 et un tronçon distal de filtrage cylindrique 11 à section circulaire. Comme on peut le voir sur la figure 2, le diamètre extérieur D1 du tronçon distal de filtrage cylindrique 11 à section circulaire est inférieur au diamètre intérieur D2 de la chambre radiale de collecte de fluides 6c. Le pion de filtrage 7 comporte également un tronçon proximal de fixation cylindrique 12 à section circulaire et à face d'extrémité proximale 13, de diamètre extérieur D3 sensiblement égal au diamètre intérieur D2 de la chambre radiale de collecte de fluides 6c au voisinage de la surface extérieure de la pièce de connexion 9. Le tronçon proximal de fixation cylindrique 12 assure la fixation du pion de filtrage 7 dans la chambre radiale de collecte de fluides 6c et obture la chambre radiale de collecte de fluides 6c.

Lors de l'utilisation de la pièce à main dentaire illustrée sur les figures 1 et 2, celle-ci est connectée selon son extrémité proximale 1 a à des moyens moteurs et à des moyens d'amenée de fluides (non représentés). Les moyens moteurs permettent d'entraîner en rotation l'arbre moteur 14 pour entraîner l'outil de travail selon un mouvement relatif dans le mandrin 4. Le mouvement relatif de l'outil de travail s'effectue selon l'axe longitudinal I-I du mandrin 4.

Un fluide est amené sous pression dans l'alésage interne de connexion 2. Pour sortir de l'alésage interne de connexion 2, le fluide est amené à sortir radialement par le canal amont de conduction de fluides 6a.

Les particules polluantes charriées par le fluide, généralement de densité supérieure à celle du fluide, seront incapables de suivre le flux lors de ce brusque changement de direction d'écoulement et resteront dans l'alésage interne de connexion.

Le fluide pénètre ensuite dans la chambre radiale de collecte de fluides 6c et s'en échappe par le canal aval de conduction de fluides 6b.

Le pion de filtrage 7 est fixé dans la chambre radiale de collecte de fluides 6c avec un faible jeu axial j (figure 2) entre sa face d'extrémité distale 10 et la paroi de fond 60c de l'alésage borgne 8 radial de la chambre radiale de collecte de fluides 6c. Le jeu axial j est petit par rapport au diamètre du canal amont de conduction de fluides 6a. Le jeu axial j permet ainsi le passage du fluide entre le canal amont de conduction de fluides 6a et le canal aval de conduction de fluides 6b.

Lors de son passage dans la chambre radiale de collecte de fluides, le fluide suivra plusieurs changements de direction d'écoulement qui sont autant de lieux de filtration par effet d'inertie. Les particules polluantes sont projetées contre le pion de filtrage 7 ou contre les parois de la chambre radiale de collecte de fluides et y restent collées.

En fonction du jeu j, on peut induire de façon complémentaire une filtration par tamisage en empêchant les particules de taille plus ou moins importante de pénétrer dans le volume V disponible de la chambre radiale de collecte de fluides 6c.

Le fluide parcourt alors enfin les premiers moyens de conduction de fluides 6 au travers du corps 1 pour être transmis aux moyens de projection 5 de fluides de la tête 3.

Le diamètre du canal amont de conduction de fluides 6a est important pour ne pas induire de perte de charges.

Du fait de la très faible longueur du canal amont de conduction de fluides 6a, la face d'extrémité distale 10 induit des turbulences dans et jusqu'à l'embouchure du canal amont de conduction de fluides 6a, augmentant la filtration par effet d'inertie lors du filtrage radial depuis l'alésage de connexion 2 vers la chambre de collecte de fluides 6c. Les particules polluantes sont en quasi-totalité, voire en totalité, amenées à demeurer dans l'alésage interne de connexion 2. Même si une particule polluante est située au voisinage immédiat de l'embouchure du canal amont de conduction de fluides 6a, celle-ci sera chassée à l'écart de l'embouchure du canal amont de conduction de fluides 6a d'une part par les turbulences, et d'autre part par le flux présent dans l'alésage interne de connexion 2 dont le sens et la direction sont représentés par la flèche 15.

Après utilisation de la pièce à main dentaire, celle-ci est déconnectée selon son extrémité proximale 1a des moyens moteurs et des moyens d'amenée de fluides (non représentés). La pièce à main dentaire se trouve alors dans la configuration illustrée sur la figure 1 dans laquelle l'utilisateur peut facilement accéder à l'alésage interne de connexion 2 selon la direction d'accès représentée par la flèche 16. L'alésage interne de connexion 2 contient la quasi-totalité des particules polluantes, et notamment les plus grosses. L'utilisateur peut alors facilement introduire un jet de fluide nettoyant afin de retirer toutes les particules polluantes qui se sont accumulées dans l'alésage interne de connexion 2. La pièce à main dentaire est alors prête à être à nouveau utilisée. Il n'y a ainsi pas besoin de démonter quoique ce soit pour le nettoyage des moyens de filtrage de la pièce à main dentaire selon l'invention. L'opération de nettoyage est ainsi rapide et simple.

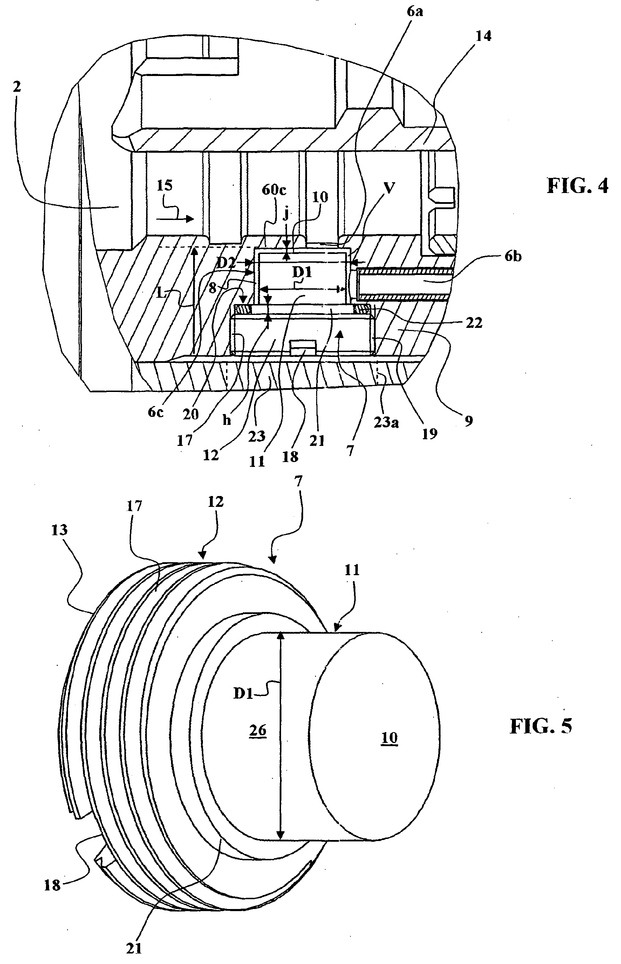

Le mode de fonctionnement de la pièce à main dentaire illustré sur les figures 1 et 2 est identique à celui du mode de réalisation de pièce à main dentaire illustré sur la figure 4.

Le mode de réalisation de pièce à main dentaire illustré sur la figure 4 diffère du précédent en ce qu'il comporte un pion de filtrage 7 différent.

Ce pion de filtrage 7 est représenté plus en détail sur la figure 5. Il comporte un tronçon proximal de fixation cylindrique 12 comprenant un filetage externe 17 et une empreinte de vissage 18 sur sa face d'extrémité proximale 13. Le filetage externe 17 est destiné à venir en prise dans un filetage interne 19 prévu sur une partie au moins de la longueur L de l'alésage borgne 8 radial de la chambre radiale de collecte de fluides 6c (figure 4).

Dans le mode de réalisation illustré sur la figure 4, le pion de filtrage 7 est rapporté dans la chambre radiale de collecte de fluides 6c par vissage jusqu'à venir en butée à l'aide d'un tronçon intermédiaire 21 contre un épaulement 20 de la chambre radiale de collecte de fluides 6c. Le tronçon intermédiaire 21 présente une hauteur h choisie pour maintenir le jeu axial j choisi entre la face d'extrémité distale 10 du pion de filtrage 7 et la paroi de fond 60c de l'alésage borgne 8 radial de la chambre radiale de collecte de fluides 6c.

Un joint torique d'étanchéité 22 est prévu en périphérie du tronçon intermédiaire 21 pour venir en légère compression contre l'épaulement 20. L'insertion du pion de filtrage 7 dans la chambre radiale de collecte de fluides 6c n'est ainsi pas limitée par la compression du joint torique d'étanchéité 22, mais par la butée du tronçon intermédiaire 21 contre l'épaulement 20. Ceci a pour effet de ne pas détériorer le joint torique d'étanchéité 22 par une trop forte compression et par de trop fortes contraintes de cisaillement.

En alternative à l'utilisation d'un tronçon intermédiaire 21 en butée contre l'épaulement 20, il est possible de prévoir un filetage indexé pour le pion de filtrage 7 afin qu'en fin de vissage de celui-ci, le jeu axial j désiré soit préservé entre la face d'extrémité distale 10 du pion de filtrage 7 et la paroi de fond 60c.

Dans le mode de réalisation illustré sur la figure 4, le pion de filtrage 7 est recouvert par une enveloppe externe de corps 23. Le démontage du pion de filtrage 7 peut alors nécessiter l'intervention d'un technicien qualifié et outillé en conséquence. Ceci garantit pour le fabricant que la pièce à main ne soit démontée et nettoyée que par des personnes habilitées et suffisamment compétentes.

En alternative, on peut prévoir une lumière 23a dans l'enveloppe externe de corps 23 (représentée en pointillés) pour accéder au pion de filtrage 7 et le démonter facilement à l'aide d'un simple tournevis. On autorise ainsi l'utilisateur à effectuer lui-même la maintenance de sa pièce à main.

L'étape de démontage du pion de filtrage 7 et de nettoyage de la chambre radiale de collecte de fluides 6c n'est cependant pas toujours requise, la quasi-totalité du filtrage s'effectuant non pas dans la chambre radiale de collecte de fluides 6c mais à l'entrée de celle-ci. Il pourra ainsi être préféré une construction plus simple comme celle illustrée sur la figure 2 où le pion de filtrage 7 est indémontable, celui-ci étant chassé dans l'alésage borgne 8 radial de la chambre radiale de collecte de fluides 6c, avec le tronçon proximal de fixation cylindrique 12 monté serré dans l'alésage borgne 8 radial de la chambre radiale de collecte de fluides 6c.

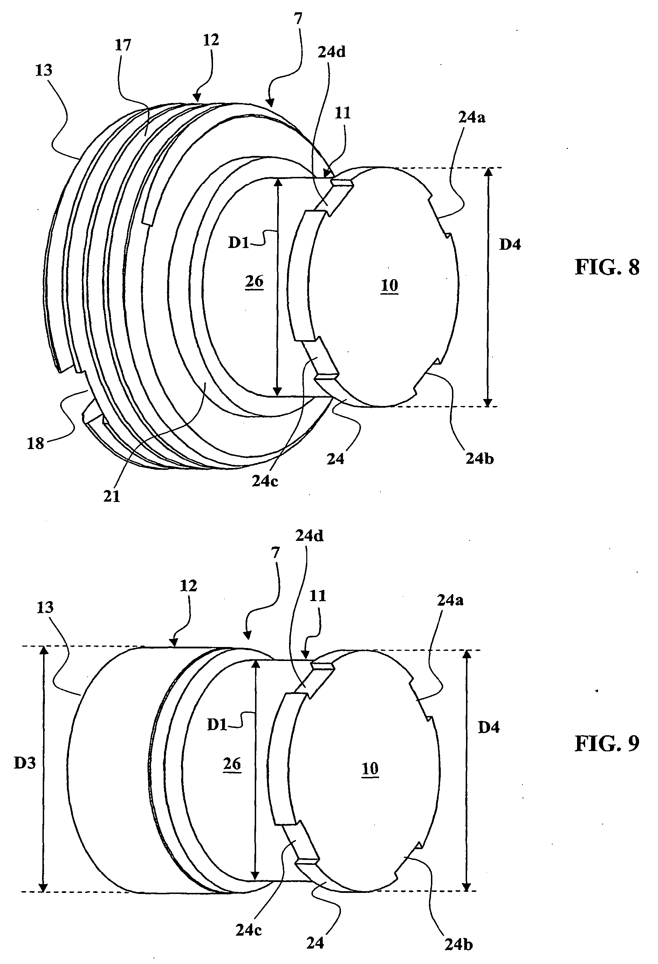

En alternative au pion de filtrage 7 illustré sur les figures 3 et 5, on peut utiliser les pions de filtrage 7 illustrés sur les figures 8 et 9, qui comportent une collerette périphérique 24 de diamètre extérieur D4 sensiblement égal au diamètre intérieur D2 de la chambre radiale de collecte de fluides 6c. Ces pions de filtrage 7 comportent également une pluralité de cannelures axiales 24a-24d prévues en périphérie de la collerette périphérique 24.

La collerette périphérique 24 permet, de par son diamètre extérieur D4, de faciliter le montage du pion de filtrage 7 dans la chambre radiale de collecte de fluides 6c en assurant un centrage parfait du pion de filtrage 7.

Un bon centrage du pion de filtrage 7 dans la chambre radiale de collecte de fluides 6c garantit une bonne homogénéité du jeu tout autour du pion de filtrage 7, et donc un meilleur filtrage.

En fonction de la taille des sections des cannelures axiales 24a-24d, celles-ci peuvent participer ou non au filtrage des particules polluantes se trouvant dans le fluide. En effet, le fluide devra passer par les cannelures axiales 24a-24d pour pénétrer ensuite complètement dans la chambre radiale de collecte de fluides 6c et atteindre le canal aval de conduction de fluides 6b.

Afin de permettre l'écoulement de fluides depuis le canal amont de conduction de fluides 6a vers le canal aval de conduction de fluides 6b, les pions de filtrage 7 des figures 8 et 9 seront rapportés dans la chambre radiale de collecte de fluides 6c de la même façon que celle indiquée sur les figures 2 et 4, c'est-à-dire avec un jeu axial j entre la face d'extrémité distale 10 du pion de filtrage 7 et la paroi de fond 60c de l'alésage borgne 8 radial de la chambre radiale de collecte de fluides 6c. Le pion de filtrage 7 de la figure 9 est destiné à être utilisé avec la pièce à main dentaire représentée sur les figures 1 et 2, tandis que le pion de filtrage 7 de la figure 8 est destiné à être utilisé avec la pièce à main dentaire représentée sur la figure 4.

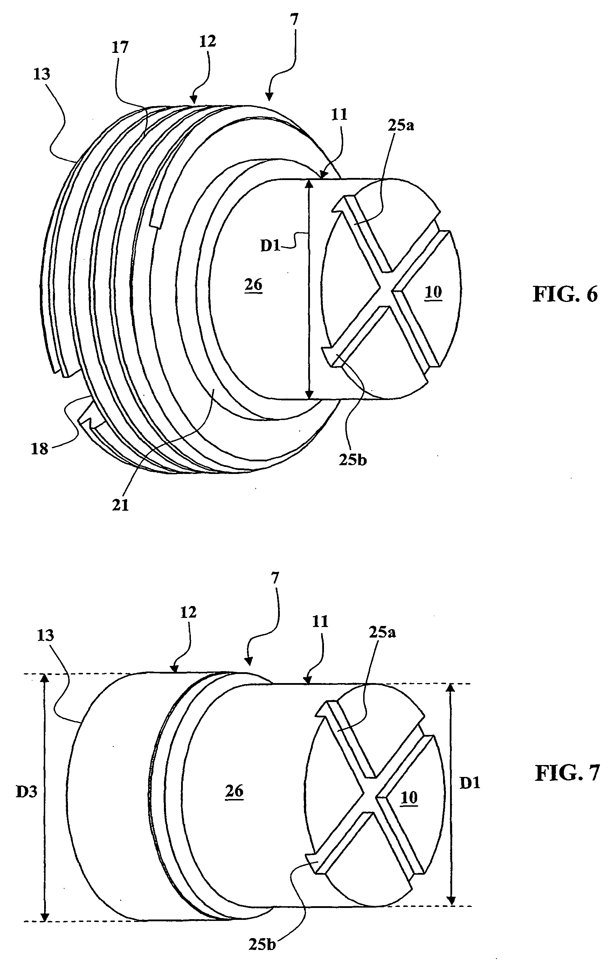

D'autres pions de filtrage peuvent encore être utilisés. On pourra par exemple utiliser les pions de filtrage 7 des figures 6 et 7, dont la face d'extrémité distale 10 comporte deux rainures 25a et 25b débouchant sur la paroi extérieure 26 du tronçon distal de filtrage cylindrique 11. Ces pions de filtrage 7 sont destinés à être fixés dans la chambre radiale de collecte de fluides 6c avec la face d'extrémité distale 10 en butée contre la paroi de fond 60c de l'alésage borgne 8 radial de la chambre radiale de collecte de fluides 6c. Il n'est ainsi plus nécessaire de fixer le pion de filtrage 7 dans la chambre radiale de collecte de fluides 6c en ménageant un jeu axial j entre la face d'extrémité distale 10 et la paroi de fond 60c de l'alésage borgne 8 radial. Le passage du fluide s'effectuera en effet depuis le canal amont de conduction de fluides 6a vers le canal aval de conduction de fluides 6b en passant par la section des rainures 25a et 25b. En fonction de la taille des sections des rainures 25a et 25b, celles-ci peuvent ou non participer au filtrage du fluide. La réalisation des rainures 25a et 25b s'avère facile et aisément maîtrisable en dimensions. Le pion de filtrage 7 de la figure 7 est destiné à être utilisé dans la pièce à main dentaire illustrée sur les figures 1 et 2, tandis que le pion de filtrage 7 illustré sur la figure 6 est destiné à être utilisé dans la pièce à main dentaire illustrée sur la figure 4.

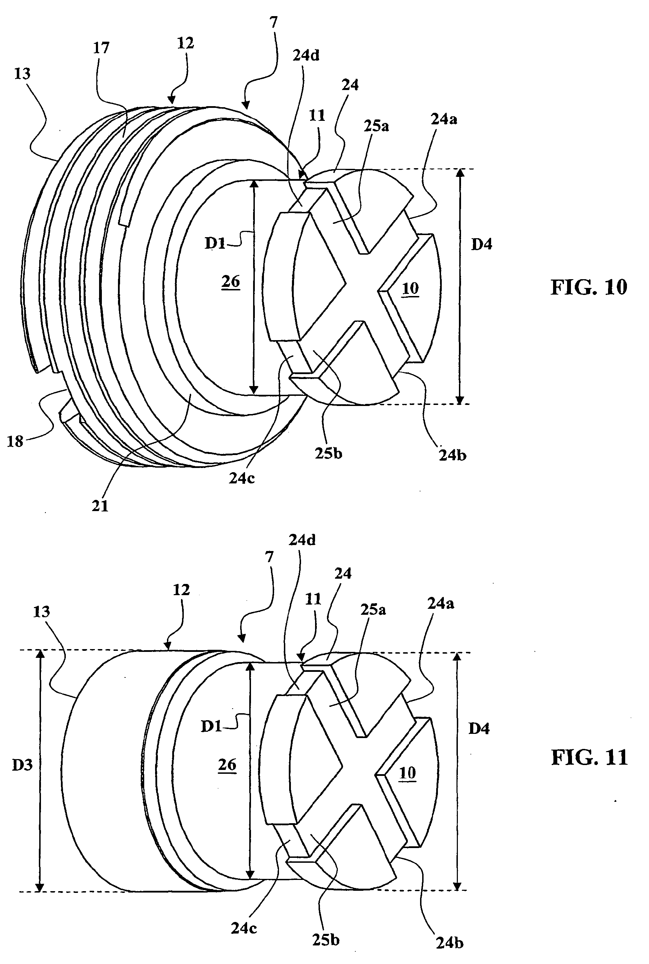

Par combinaison des caractéristiques des pions de filtrage 7 des figures 6 et 8, on peut choisir d'utiliser un pion de filtrage 7 du type de celui représenté sur la figure 10. Celui-ci comporte d'une part une collerette périphérique 24 de diamètre D4 sensiblement égal au diamètre D2 de la chambre radiale de collecte de fluides 6c (figures 2 et 4), avec des cannelures axiales 24a-24d. Le pion de filtrage 7 comporte également des rainures 25a-25b réalisées sur la face d'extrémité distale 10 et débouchant sur la paroi extérieure 26 du tronçon distal de filtrage cylindrique 11. Le tronçon proximal de fixation cylindrique 12 de ce pion de filtrage 7 comporte un filetage externe 17, tandis que la face d'extrémité proximale 13 comporte une empreinte de vissage 18. Le pion de filtrage 7 de la figure 10 est destiné à être inséré dans la chambre radiale de collecte de fluides 6c du mode de réalisation de pièce à main de la figure 4. Le pion de filtrage 7 est fixé dans celle-ci avec la face d'extrémité distale 10 en butée contre la paroi de fond 60c de l'alésage borgne 8 radial de la chambre radiale de collecte de fluides 6c. Afin de passer du canal amont de conduction de fluides 6a vers le canal aval de conduction de fluides 6b, le fluide passe dans les rainures 25a et 25b puis dans les cannelures axiales 24a-24d en périphérie de la collerette périphérique 24. Les propriétés de filtrage du pion de filtrage 7 de la figure 10 sont déterminées par la taille des sections des rainures 25a et 25b et/ou par la taille des sections des cannelures axiales 24a-24d.

Le pion de filtrage 7 de la figure 10 est destiné à être utilisé dans le mode de réalisation de pièce à main illustré sur la figure 4.

Quant au pion de filtrage 7 de la figure 11, celui-ci diffère de celui de la figure 10 en ce que son tronçon proximal de fixation cylindrique 12 est destiné à être monté serré dans l'alésage borgne 8 radial de la chambre radiale de collecte de fluides 6c lorsque sa face d'extrémité distale 10 est en butée contre la paroi de fond 60c de l'alésage borgne 8 radial. Le pion de filtrage 7 de la figure 11 est ainsi destiné à être utilisé dans le mode de réalisation de pièce à main illustré sur les figures 1 et 2.

Dans tous les modes de réalisation de pièce à main illustrés sur les figures, et quels que soient les types de pion de filtrage 7 utilisés, on constate que le fait de filtrer les fluides circulant dans le corps 1 n'augmente en rien son encombrement.

La présente invention n'est pas limitée aux modes de réalisation qui ont été explicitement décrits, mais elle en inclut les diverses variantes et généralisations contenues dans le domaine des revendications ci-après.

## Revendications

1. Pièce à main dentaire permettant de porter un outil de travail et de l'entraîner en mouvement relatif, comprenant :
- un corps (1) avec une extrémité proximale (1a) de corps (1) à alésage interne de connexion (2) et une extrémité distale (1b) de corps (1), apte à être connecté selon son extrémité proximale (1a) à des moyens moteurs et à des moyens d'amenée de fluides,
- une tête (3) connectée à l'extrémité distale (1b) de corps (1), apte à porter l'outil de travail, et comportant des moyens de projection (5) de fluides en direction de la zone de travail de l'outil,
- au moins des premiers moyens de conduction de fluides (6), permettant de conduire les fluides au travers du corps (1) depuis l'extrémité proximale (1 a) du corps (1) et de les transmettre aux moyens de projection (5) de fluides de la tête (3), comprenant un canal amont de conduction de fluides (6a), un canal aval de conduction de fluides (6b), et une chambre de collecte de fluides (6c) dans le corps (1), disposée entre le canal amont de conduction de fluides (6a) et le canal aval de conduction de fluides (6b),
**caractérisée en ce que** :
- la chambre de collecte de fluides (6c) est radiale **en ce qu'**elle comprend un alésage borgne (8) radial à section circulaire, réalisé dans le corps (1) et débouchant sur la surface extérieure du corps (1), avec une paroi de fond (60c) se terminant au voisinage proche de l'alésage interne de connexion (2) du corps (1),
- le canal amont de conduction de fluides (6a) s'étend radialement depuis l'alésage interne de connexion (2) du corps (1) vers la paroi de fond (60c) de la chambre radiale de collecte de fluides (6c),
- un pion de filtrage (7), présentant une forme extérieure sensiblement complémentaire de la forme intérieure de la chambre radiale de collecte de fluides (6c), est rapporté dans la chambre radiale de collecte de fluides (6c) avec un jeu qui permet le passage et assure le filtrage des fluides entre le canal amont de conduction de fluides (6a) et le canal aval de conduction de fluides (6b).

2. Pièce à main selon la revendication 1, **caractérisée en ce que** :
- le canal amont de conduction de fluides (6a) s'étend radialement depuis l'alésage interne de connexion (2) du corps (1) vers la chambre radiale de collecte de fluides (6c),
- le canal aval de conduction de fluides (6b) s'étend depuis la chambre radiale de collecte de fluides (6c) vers l'extrémité distale (1b) du corps (1).

3. Pièce à main selon l'une des revendications 1 ou 2, **caractérisée en ce que** :
- le pion de filtrage (7) comporte une face d'extrémité distale (10) et un tronçon distal de filtrage cylindrique (11) à section circulaire, le diamètre extérieur (D1) du tronçon distal de filtrage cylindrique (11) étant inférieur au diamètre intérieur (D2) de la chambre radiale de collecte de fluides (6c),
- le pion de filtrage (7) comporte un tronçon proximal de fixation cylindrique (12) à section circulaire et à face d'extrémité proximale (13), de diamètre extérieur (D3) sensiblement égal au diamètre intérieur (D2) de la chambre radiale de collecte de fluides (6c), destiné à assurer la fixation du pion de filtrage (7) dans la chambre radiale de collecte de fluides (6c) et à obturer la chambre radiale de collecte de fluides (6c).

4. Pièce à main selon la revendication 3, **caractérisée en ce que**, au voisinage de sa face d'extrémité distale (10), le pion de filtrage (7) comporte :
- une collerette périphérique (24) de diamètre extérieur (D4) sensiblement égal au diamètre intérieur (D2) de la chambre radiale de collecte de fluides (6c),
- au moins une cannelure axiale (24a-24d) prévue en périphérie de la collerette (24).

5. Pièce à main selon l'une des revendications 3 ou 4, **caractérisée en ce que** le pion de filtrage (7) est fixé dans la chambre radiale de collecte de fluides (6c) avec un jeu axial (j) entre sa face d'extrémité distale (10) et la paroi de fond (60c) de l'alésage borgne (8) radial de la chambre radiale de collecte de fluides (6c), le jeu axial (j) permettant le passage et assurant le filtrage des fluides entre le canal amont de conduction de fluides (6a) et le canal aval de conduction de fluides (6b).

6. Pièce à main selon l'une des revendications 3 ou 4, **caractérisée en ce que** :
- la face d'extrémité distale (10) comporte au moins une rainure (25a, 25b) débouchant sur la paroi extérieure (26) du tronçon distal de filtrage cylindrique (11),
- le pion de filtrage (7) est fixé dans la chambre radiale de collecte de fluides (6c) avec la face d'extrémité distale (10) en butée contre la paroi de fond (60c) de l'alésage borgne (8) radial de la chambre radiale de collecte de fluides (6c).

7. Pièce à main selon l'une quelconque des revendications 3 à 6, **caractérisée en ce que** le pion de filtrage (7) est chassé dans l'alésage borgne (8) radial de la chambre radiale de collecte de fluides (6c), avec le tronçon proximal de fixation cylindrique (12) du pion de filtrage (7) monté serré dans l'alésage borgne (8) radial de la chambre radiale de collecte de fluides (6c).

8. Pièce à main selon l'une quelconque des revendications 3 à 6, **caractérisée en ce que** :
- l'alésage borgne (8) radial de la chambre radiale de collecte de fluides (6c) comporte un filetage interne (19) sur une partie au moins de sa longueur (L),
- le tronçon proximal de fixation cylindrique (12) du pion de filtrage (7) comporte un filetage externe (17),
- la face d'extrémité proximale (13) du tronçon proximal de fixation cylindrique (12) du pion de filtrage (7) comporte une empreinte de vissage (18).

## Patentansprüche

1. Hand-dentalinstrument, das es ermöglicht, ein Arbeitswerkzeug zu tragen und dieses mit einer relativen Bewegung anzutreiben, umfassend:
- einen Körper (1) mit einem proximalen Körper (1)-Ende (1a) mit einer internen Verbindungsbohrung (2) und einem distalen Körper (1)-Ende (1b), der eingerichtet ist, an seinem proximalen Ende (1a) mit Antriebsmitteln und Fluidzuführmitteln verbunden zu werden,
- einen mit dem distalen Ende (1b) des Körpers (1) verbundenen Kopf (3), der eingerichtet ist, das Arbeitswerkzeug zu tragen und der Mittel (5) zum Sprühen von Fluiden in die Richtung des Arbeitsbereichs des Werkzeugs enthält,
- mindestens erste Fluidtransportmittel (6), die es ermöglichen, Fluide durch den Körper (1) ab dem proximalen Ende (1a) des Körpers (1) zu leiten und diese zu den Mitteln (5) zum Sprühen von Fluiden des Kopfes (3) zu übertragen, umfassend einen Fluidhintransportkanal (6a), einen Fluidrücktransportkanal (6b) und eine Fluidsammelkammer (6c) im Körper (1) zwischen dem Fluidhintransportkanal (6a) und dem Fluidrücktransportkanal (6b),
**dadurch gekennzeichnet, dass**:
- die Fluidsammelkammer (6c) radial ist und dass sie eine radiale Sacklochbohrung (8) mit kreisförmigem Querschnitt umfasst, die in dem Körper (1) gebildet ist und zur äußeren Oberfläche des Körpers (1) führt, mit einer Rückwand (60c), die in der Nähe der internen Verbindungsbohrung (2) des Körpers (1) endet,
- der Fluidhintransportkanal (6a) sich radial von der internen Verbindungsbohrung (2) des Körpers (1) zur Rückwand (60c) der radialen Fluidsammelkammer (6c) erstreckt,
- ein Filtrationsstück (7), das eine Außenform aufweist, die im Wesentlichen komplementär zur Innenform der radialen Fluidsammelkammer (6c) ist, in der radialen Fluidsammelkammer (6c) mit einem Spiel angebracht ist, das den Durchfluss von Fluiden ermöglicht und die Filtration von Fluiden zwischen dem Fluidhintransportkanal (6a) und dem Fluidrücktransportkanal (6b) sicherstellt.

2. Hand-dentalinstrument nach Anspruch 1, **dadurch gekennzeichnet, dass**:
- sich der Fluidhintransportkanal (6a) radial von der internen Verbindungsbohrung (2) des Körpers (1) zur radialen Fluidsammelkammer (6c) erstreckt,
- sich der Fluidrücktransportkanal (6b) radial von der radialen Fluidsammelkammer (6c) zum distalen Ende (1b) des Körpers (1) erstreckt.

3. Hand-dentalinstrument nach einem der Ansprüche 1 oder 2, **dadurch gekennzeichnet, dass**:
- das Filtrationsstück (7) eine distale Endfläche (10) und einen zylindrischen distalen Filtrationsabschnitt (11) mit kreisförmigem Querschnitt enthält, wobei der Außendurchmesser (D1) des zylindrischen distalen Filtrationsabschnitts (11) kleiner ist, als der Innendurchmesser (D2) der radialen Fluidsammelkammer (6c),
- das Filtrationsstück (7) einen proximalen zylindrischen Abschnitt (12) zur Fixierung mit kreisförmigem Querschnitt und proximaler Endfläche (13) umfasst, dessen Außendurchmesser (D3) im Wesentlichen gleich dem Innendurchmesser (D2) der radialen Fluidsammelkammer (6c) ist, und der eingerichtet ist, das Filtrationsstück (7) in der radialen Fluidsammelkammer (6c) zu fixieren und die radiale Fluidsammelkammer (6c) zu verschließen.

4. Hand-dentalinstrument nach Anspruch 3, **dadurch gekennzeichnet, dass** das Filtrationsstück (7) in der Umgebung seiner distalen Endfläche (10) umfasst:
- einen sich nach außen erstreckenden Flansch (24) mit einem Außendurchmesser (D4), der im Wesentlichen gleich dem Innendurchmesser (D2) der radialen Fluidsammelkammer (6c) ist,
- wenigstens einen axial verlaufenden Kanal (24a-24d), der an der Außenseite des Flansches (24) angeordnet ist.

5. Hand-dentalinstrument nach einem der Ansprüche 3 oder 4, **dadurch gekennzeichnet, dass** das Filtrationsstück (7) in der radialen Fluidsammelkammer (6c) mit einem axialen Spiel (j) zwischen seiner distalen Endfläche (10) und der Rückwand (60c) der radialen Sacklochbohrung (8) der radialen Fluidsammelkammer (6c) fixiert ist, wobei das axiale Spiel (j) einen Durchfluss und eine Filtration der Fluide zwischen dem Fluidhintransportkanal (6a) und dem Fluidrücktransportkanal (6b) ermöglicht.

6. Hand-dentalinstrument nach einem der Ansprüche 3 oder 4, **dadurch gekennzeichnet, dass**:
- die distale Endfläche (10) wenigstens eine Nut (25a, 25b) enthält, die zur Außenwand (26) des zylindrischen distalen Filtrationsabschnittes (11) führt,
- das Filtrationsstück (7) in der radialen Fluidsammelkammer (6c) mit der distalen Endfläche (10) an der Rückwand (60c) der radialen Sacklochbohrung (8) der radialen Fluidsammelkammer (6c) anliegend fixiert ist.

7. Hand-dentalinstrument nach einem der Ansprüche 3 bis 6, **dadurch gekennzeichnet, dass** das Filtrationsstück (7) in der radialen Sacklochbohrung (8) der radialen Fluidsammelkammer (6c) versenkt ist, wobei der zylindrische Abschnitt (12) zur proximalen Fixierung des Filtrationsstückes (7) in der Sacklochbohrung (8) der radialen Fluidsammelkammer (6c) verpresst ist.

8. Hand-dentalinstrument nach einem der Ansprüche 3 bis 6, **dadurch gekennzeichnet, dass**:
- die Sacklochbohrung (8) der radialen Fluidsammelkammer (6c) ein Innengewinde (19) über wenigstens einen Teil seiner Länge (L) umfasst,
- der zylindrische Abschnitt (12) zur proximalen Fixierung des Filtrationsstücks (7) ein Außengewinde (17) umfasst,
- die proximale Endfläche (13) des proximalen zylindrischen Abschnitts (12) zur Fixierung des Filtrationsstücks (7) einen Schraubaufdruck (18) enthält.

## Claims

1. Hand held dental instrument for carrying a working tool and driving it in relative movement, including:
- a body (1) with a proximal end (1a) of the body (1) with an internal connecting bore (2) and a distal end (1b) of the body (1), adapted to be connected at its proximal end (1a) to driving means and to fluids feed means,
- a head (3) connected to the distal end (1b) of the body (1), able to carry the working tool, and including means (5) for spraying fluids in the direction of the working area of the tool,
- at least first fluids conveying means (6), for conveying the fluids through the body (1) from the proximal end (1a) of the body (1) and transmitting them to the fluids spraying means (5) of the head (3), including an upstream fluids conveying channel (6a), a downstream fluids conveying channel (6b), and a fluids collecting chamber (6c) in the body (1), between the upstream fluids conveying channel (6a) and the downstream fluids conveying channel (6b),
**characterized in that**:
- the fluids collecting chamber (6c) is radial, including a circular section radial blind bore (8), produced in the body (1) and opening onto the exterior surface of the body (1), with a back wall (60c) terminating in the near vicinity of the internal connecting bore (2) of the body (1),
- the upstream fluids conveying channel (6a) extends radially from the internal connecting bore (2) of the body (1) towards the back wall (60c) of the radial fluids collecting chamber (6c),
- a filtration piece (7), having an exterior shape substantially complementary to the interior shape of the radial fluids collecting chamber (6c), is mounted in the radial fluids collecting chamber (6c) with a clearance to allow the passage of and to filter fluids between the upstream fluids conveying channel (6a) and the downstream fluids conveying channel (6b).

2. Hand held instrument according to claim 1, **characterized in that**:
- the upstream fluids conveying channel (6a) extends radially from the internal connecting bore (2) of the body (1) to the radial fluids collecting chamber (6c),
- the downstream fluids conveying channel (6b) extends from the radial fluids collecting chamber (6c) to the distal end (1b) of the body (1).

3. Hand held instrument according to either of claims 1 or 2, **characterized in that**:
- the filtration piece (7) includes a distal end face (10) and a circular section cylindrical distal filtration section (11), the outside diameter (D1) of the cylindrical distal filtration section (11) being less than the inside diameter (D2) of the radial fluids collecting chamber (6c),
- the filtration piece (7) includes a circular section cylindrical proximal fixing section (12) and with a proximal end face (13) the outside diameter (D3) of which is substantially equal to the inside diameter (D2) of the radial fluids collecting chamber (6c), intended to fix the filtration piece (7) in the radial fluids collecting chamber (6c) and to close the radial fluids collecting chamber (6c).

4. Hand held instrument according to claim 3, **characterized in that**, in the vicinity of its distal end face (10), the filtration piece (7) includes:
- a peripheral flange (24) with an outside diameter (D4) substantially equal to the inside diameter (D2) of the radial fluids collecting chamber (6c),
- at least one axial groove (24a-24d) provided at the periphery of the flange (24).

5. Hand held instrument according to either of claims 3 or 4, **characterized in that** the filtration piece (7) is fixed in the radial fluids collecting chamber (6c) with an axial clearance (j) between its distal end face (10) and the back wall (60c) of the radial blind bore (8) of the radial fluids collecting chamber (6c), the axial clearance (j) enabling passage of and filtering the fluids between the upstream fluids conveying channel (6a) and the downstream fluids conveying channel (6b).

6. Hand held instrument according to either of claims 3 or 4, **characterized in that**:
- the distal end face (10) includes at least one groove (25a, 25b) opening onto the exterior wall (26) of the cylindrical distal filtration section (11),
- the filtration piece (7) is fixed in the radial fluids collecting chamber (6c) with the distal end face (10) abutted against the back wall (60c) of the radial blind bore (8) of the radial fluids collecting chamber (6c).

7. Hand held instrument according to any one of claims 3 to 6, **characterized in that** the filtration piece (7) is driven into the radial blind bore (8) of the radial fluids collecting chamber (6c) with the cylindrical proximal fixing section (12) of the filtration piece (7) a tight fit in the radial blind bore (8) of the radial fluids collecting chamber (6c).

8. Hand held instrument according to any one of claims 3 to 6, **characterized in that**:
- the radial blind bore (8) of the radial fluids collecting chamber (6c) includes an internal thread (19) over at least part of its length (L),
- the cylindrical proximal fixing section (12) of the filtration piece (7) includes an external thread (17),
- the proximal end face (13) of the cylindrical proximal fixing section (12) of the filtration piece (7) includes a screwing imprint (18).
